# DEMANDE DE BREVET EUROPEEN

(11) **EP 3 059 477 A1**
(43) Date de publication de la demande: **24.08.2016**
(21) Numéro de dépôt: 16156164.2
(22) Date de dépôt: 17.02.2016
(51) Int. Cl.: F16K 1/20, F16K 27/07

(54) **CLAPET DE FOND DE CUVE**

(30) Priorité: 18.02.2015 FR 1551365
(71) Demandeur: Perolo SAS, 33390 Blaye (FR)
(72) Inventeur: SURMAN, Pierre, 33390 CARS (FR); EZCURDIA, Damien, 64250 CAMBO LES BAINS (FR); BOUTEILLER, Emeric, 33240 SAINT ANDRE DE CUBZAC (FR)
(74) Mandataire: Ipside

(57) **Abrégé**

L'invention concerne un clapet de fond de cuve comportant un corps (1) de clapet comprenant un conduit d'écoulement solidaire d'un moins une bride pour son montage sur une cuve, ledit clapet comportant :
- un élément (5) d'obturation mobile entre une position d'ouverture pour libérer l'entrée dudit conduit d'écoulement et une position de fermeture pour obturer ladite entrée,
- ledit élément (5) d'obturation réalisant un mouvement de translation et un mouvement de rotation lors de son déplacement entre lesdites positions de fermeture et d'ouverture.

Selon l'invention, ladite entrée du conduit d'écoulement comporte une portée (4) d'étanchéité non métallique et ledit élément (5) d'obturation comporte une portée d'étanchéité métallique, lesdites portées étant plaquées hermétiquement l'une contre l'autre dans ladite position de fermeture dudit élément (5) d'obturation pour assurer l'étanchéité de cette fermeture.

## Description

### ARRIERE-PLAN DE L'INVENTION

### Domaine de l'invention

La présente invention concerne un clapet de fond de cuve, et notamment, mais non exclusivement, un tel clapet pour contrôler la décharge de gaz ou liquides.

Elle concerne encore un conteneur tel qu'une cuve équipé d'un tel clapet.

### Arrière-plan technologique

Un tel clapet de fond de cuve est généralement mis en oeuvre pour assurer l'étanchéité d'un orifice de vidange d'une cuve. Cette cuve peut être une cuve fixe ou mobile par exemple celle d'un wagon-citerne.

Un tel clapet comprend typiquement un conduit d'écoulement fermé par un élément de fermeture, lequel est déplaçable en position d'ouverture, en amont du clapet, par un levier monté de manière pivotante sur le corps de clapet.

L'étanchéité de la fermeture est assurée par un joint d'étanchéité torique monté dans un logement tel qu'une gorge, sur l'élément de fermeture. Ce joint d'étanchéité est reçu en position de fermeture dans un siège métallique placé à l'entrée du corps de clapet.

On observe que dans cette configuration du clapet, le corps de clapet a tendance à se piquer rapidement lorsqu'il est exposé à une corrosion chimique, phénomène encore connu sous le nom de "pitting".

En outre, lors du déplacement de l'élément d'obturation en position de fermeture, ce dernier tend à claquer contre le corps de clapet métallique, entraînant une usure prématurée du joint d'étanchéité.

Il est donc nécessaire de réaliser régulièrement des opérations de maintenance pour changer le joint d'étanchéité.

La présente invention vise à pallier les divers inconvénients ci-dessus exposés en proposant un clapet de fond de cuve, particulièrement simple dans sa conception et dans son mode opératoire, économique et garantissant une plus grande tenue dans le temps du joint d'étanchéité, et donc moins d'opérations de maintenance.

Un autre objet de la présente invention est un tel clapet dont le corps de clapet est mieux protégé face à la corrosion chimique.

### BREVE DESCRIPTION DE L'INVENTION

A cet effet, l'invention concerne un clapet de fond de cuve comportant un corps de clapet comprenant un conduit d'écoulement solidaire d'un moins une bride pour son montage sur une cuve, ledit corps de clapet comportant une entrée de clapet, ledit clapet comportant :
- un élément d'obturation mobile entre une position d'ouverture pour libérer ladite entrée et permettre ainsi le passage de matière au travers dudit conduit d'écoulement et une position de fermeture pour obturer ladite entrée,
- ledit élément d'obturation réalisant un mouvement de translation et un mouvement de rotation lors de son déplacement entre lesdites positions de fermeture et d'ouverture.
Selon l'invention, cette entrée de clapet comporte une portée d'étanchéité non métallique et ledit élément d'obturation comporte une portée d'étanchéité métallique, lesdites portées étant plaquées hermétiquement l'une contre l'autre dans ladite position de fermeture dudit élément d'obturation pour assurer l'étanchéité de cette fermeture.

Cette entrée de clapet est destinée à être placée du côté de la cuve de manière à permettre l'évacuation au moins partielle du contenu de celle-ci. Le clapet comprend de manière connue un organe d'actionnement de cet élément d'obturation entre lesdites positions d'ouverture et de fermeture.

La portée d'étanchéité métallique constitue donc un siège de joint pour recevoir ladite portée non métallique placée à l'entrée dudit clapet.

On constate ainsi qu'un clapet de fond de cuve ayant un tel design original requiert, suite à des expositions répétées à des matières corrosives, uniquement le changement de la garniture et non du corps de clapet comme avec les clapets de l'état de l'art.

Dans différents modes de réalisation particuliers de ce procédé de contrôle, chacun ayant ses avantages particuliers et susceptibles de nombreuses combinaisons techniques possibles:
- ladite portée d'étanchéité non métallique est constituée par une garniture souple.
   Cette garniture souple est reçue dans un logement placée à l'entrée dudit conduit d'écoulement.
   De préférence, cette garniture est un joint d'étanchéité plein, lequel est configuré pour centrer ledit élément d'obturation en position de fermeture.
   A titre d'exemple, ladite garniture est un joint d'étanchéité conique ou semi-hémisphérique.
   On entend par joint "semi-hémisphérique", un joint présentant une portion hémisphérique.
   Ce joint d'étanchéité est donc non torique.
- ladite garniture est réalisée en polymère d'hydrocarbure fluoré. De manière avantageuse, ce joint est ainsi réalisé dans un matériau inerte vis-à-vis du liquide destiné à être contenu dans ladite cuve et résistant à la corrosion.
- ladite garniture présente une épaisseur permettant une mise en saillie d'une partie de cette garniture du corps de clapet de manière à assurer également l'étanchéité de l'assemblage dudit corps de clapet avec une bride de réception de ladite cuve,
- ledit élément d'obturation est un disque métallique comportant une section droite de forme tronconique.
   Cet élément d'obturation est ainsi entièrement et uniquement métallique.
- ledit conduit d'écoulement est solidaire à chacune de ses extrémités d'une bride de fixation,
- ledit corps de clapet comportant une sortie de clapet circulaire de diamètre nominal DN1, ledit élément d'obturation présente un diamètre strictement supérieur à DN1.
A titre purement illustratif, ladite sortie circulaire présentant un diamètre nominal DN 80, ladite portée d'étanchéité non métallique et ledit élément d'obturation ont un diamètre DN 100.

La présente invention concerne également un conteneur de fluide tel qu'une cuve, équipé d'un clapet de fond équipé d'un système tel que décrit précédemment.

### BREVE DESCRIPTION DES DESSINS

D'autres avantages, buts et caractéristiques particulières de la présente invention ressortiront de la description qui va suivre faite, dans un but explicatif et nullement limitatif, en regard des dessins annexés, dans lesquels :
- la figure 1 est une vue en coupe longitudinale d'un clapet de fond de cuve selon un mode de réalisation particulier de la présente invention,
- la figure 2 est une vue partielle et élargie du clapet de la Fig. 1, laquelle montre la garniture pincée entre deux brides destinées à être placées côté cuve ;
- la figure 3 est une vue de face du clapet de la Fig. 1 ;

### DESCRIPTION DETAILLEE DE MODES DE REALISATION DE L'INVENTION

On notera tout d'abord que les figures ne sont pas à l'échelle.

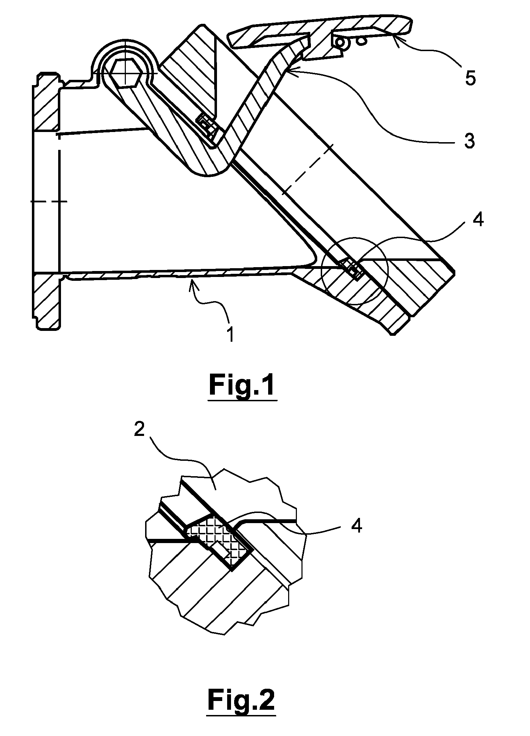

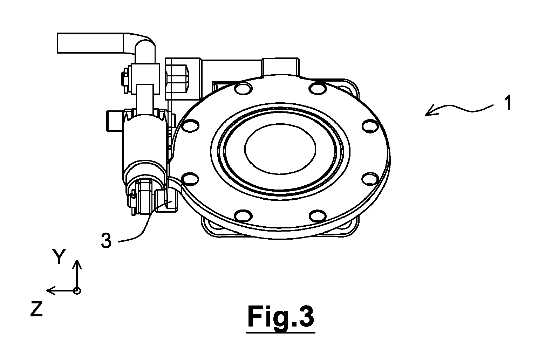

Les figures 1 à 3 montrent des vues en coupe d'un clapet de fond de cuve selon un mode de réalisation préféré de l'invention.

Ce clapet de fond de cuve comprend un corps 1 de clapet comportant un conduit d'écoulement solidaire à ses deux extrémités d'une bride. Une première de ces brides, placée au niveau d'une entrée de clapet, est destinée à être montée sur une bride de réception placée dans la partie inférieure latérale d'un conteneur. L'autre bride placée au niveau d'une sortie de clapet est destinée à être reliée par exemple à un conduit de vidange du conteneur.

A l'extrémité du conduit d'écoulement, du côté du conteneur, est placé un joint 4 d'étanchéité plein conique, lequel est reçu dans un logement prévu à cet effet dans le corps 1 de clapet. Ce logement est formé par exemple par une gorge présentant une saillie pour le positionnement du joint.

Un arbre 3 d'actionnement, encore appelé poussoir et monté en pivotement sur le conduit d'écoulement, permet de déplacer par son actionnement une soupape 5 entre une position d'ouverture et une position de fermeture.

Lors de son déplacement entre ces deux positions extrêmes, la soupape 5 réalise un mouvement de translation et un mouvement de rotation.

En position d'ouverture, cette soupape 5 est placée en amont de l'ouverture de clapet du côté du conteneur en dégageant cette ouverture pour laisser libre passage à la matière contenue dans ce conteneur.

En position de fermeture, la soupape 5 jouxte hermétiquement le joint 4 d'étanchéité souple pour assurer une fermeture étanche de l'entrée de clapet.

Cette soupape 5 ayant la forme d'un disque, est intégralement métallique et présente, en conséquence, une portée d'étanchéité métallique destinée à coopérer avec le joint 4 d'étanchéité souple placé à l'entrée du corps 1 de clapet pour assurer l'étanchéité de la fermeture.

Le joint 4 d'étanchéité plein, ou encore massif, qui est réalisé avantageusement en polytétrafluoroéthylène poreux expansé (PTFE), présente par ailleurs une épaisseur lui permettant de faire saillie du clapet.

Ainsi, et comme représenté sur la Figure 2, lors du montage de clapet sur une bride 2 de réception d'un conteneur, ce joint 4 d'étanchéité est pincé entre les brides. Il n'est donc pas nécessaire d'utiliser un joint plat supplémentaire pour assurer l'étanchéité entre ces brides ainsi assemblées.

Comme le montre la Figure 1, la section transversale droite du conduit d'écoulement est plus grande à l'entrée du clapet qu'à sa sortie. La sortie de clapet présente ici une section transversale droite circulaire mais cette dernière pourrait être elliptique.

La mise en oeuvre d'une soupape 5 de diamètre nominal DN 100 présentant une grande levée, et par conséquent autorisant une libération maximale de l'entrée de clapet pour un débit optimal, est rendue possible grâce au joint 4 d'étanchéité dont le positionnement original permet de résister aux efforts de fermeture nécessaires pour garantir l'étanchéité de la fermeture du clapet.

Ce joint d'étanchéité protège avantageusement le corps 1 de clapet face à la corrosion notamment de corrosion par piqûres ("pitting").

## Revendications

1. Clapet de fond de cuve comportant un corps (1) de clapet comprenant un conduit d'écoulement solidaire d'un moins une bride pour son montage sur une cuve, ledit corps (1) de clapet comportant une entrée de clapet, ledit clapet comportant :
- un élément (5) d'obturation mobile entre une position d'ouverture pour libérer ladite entrée et permettre ainsi le passage de matière au travers dudit conduit d'écoulement et une position de fermeture pour obturer ladite entrée,
- ledit élément (5) d'obturation réalisant un mouvement de translation et un mouvement de rotation lors de son déplacement entre lesdites positions de fermeture et d'ouverture, **caractérisé en ce que**
- ladite entrée de clapet comporte une portée (4) d'étanchéité non métallique et ledit élément (5) d'obturation comporte une portée d'étanchéité métallique, lesdites portées étant plaquées hermétiquement l'une contre l'autre dans ladite position de fermeture dudit élément (5) d'obturation pour assurer l'étanchéité de cette fermeture.

2. Clapet selon la revendication 1, **caractérisé en ce que** ladite portée (4) d'étanchéité non métallique est constituée par une garniture souple.

3. Clapet selon la revendication 2, **caractérisé en ce que** ladite garniture est un joint d'étanchéité plein, lequel est configuré pour centrer ledit élément (5) d'obturation en position de fermeture.

4. Clapet selon la revendication 3, caractérisé en ce ladite garniture est un joint d'étanchéité conique ou semi-hémisphérique.

5. Clapet selon l'une quelconque des revendications 2 à 4, **caractérisé en ce que** ladite garniture est réalisée en polymère d'hydrocarbure fluoré et encore mieux en polytétrafluoroéthylène poreux expansé (PTFE).

6. Clapet selon l'une quelconque des revendications 2 à 5, **caractérisé en ce que** ladite garniture présente une épaisseur permettant une mise en saillie d'une partie de cette garniture du corps (1) de clapet de manière à assurer également l'étanchéité de l'assemblage dudit corps (1) de clapet avec une bride (2) de réception de ladite cuve.

7. Clapet selon l'une quelconque des revendications 1 à 6, **caractérisé en ce que** ledit élément (5) d'obturation est un disque métallique comportant une section droite de forme tronconique.

8. Clapet selon l'une quelconque des revendications 1 à 7, **caractérisé en ce que** ledit conduit d'écoulement est solidaire à chacune de ses extrémités d'une bride de fixation.

9. Clapet selon l'une quelconque des revendications 1 à 8, **caractérisé en ce que** ledit corps (1) de clapet comportant une sortie de clapet circulaire de diamètre nominal DN1, ledit élément (5) d'obturation présente un diamètre strictement supérieure à DN1.

10. Conteneur de fluide tel qu'une cuve, équipé d'un clapet de fond selon l'une quelconque des revendications 1 à 9.
